# EUROPÄISCHE PATENTANMELDUNG

(11) **EP 0 990 503 A1**
(43) Veröffentlichungstag der Anmeldung: **05.04.2000**
(21) Anmeldenummer: 99117769.2
(22) Anmeldetag: 09.09.1999
(51) Int. Cl.: B29C 47/00, B29C 47/92

(54) **Verfahren zur Regelung des Durchmessers einer zwischen einem Vorzugsrollenpaar und einem Abzugsrollenpaar zu einer Schlauchfolienblase aufgeblasenen Schlauchfoilenbahn**

(30) Priorität: 28.09.1998 DE 19844434
(71) Anmelder: Windmöller & Hölscher, D-49525 Lengerich (DE)
(72) Erfinder: Lage, Karl-Heinz, 49525 Lengerich (DE)

(57) **Zusammenfassung**

Zur Erreichung anderer Eigenschaften oder verbesserter Festigkeitswerte wird eine im Schlauchfolienblasverfahren hergestellte und zu einer Rolle aufgewickelte Kunststoffschlauchfolienbahn (1,8) nochmals durch Aufblasen zu einer Schlauchfolienblase (7) und Erwärmen verstreckt. Das Aufblasen erfolgt zwischen einem Vorzugsrollenpaar (6) und einem Abzugsrollenpaar (13), wobei die Schlauchfolienbahn (1,8) kontinuierlich aus der Schlauchfolienblase (7) durch das Abzugsrollenpaar (13) abgezogen und durch zwei keilförmig zueinander angeordnete und sich in Richtung auf den Einzugsspalt des Abzugswalzenpaares in verengende Flachlegeeinrichtungen (14) flachgelegt wird. Um den Luftdruck in der Schlauchfolienblase (7) konstant oder auf einem solchen Wert zu halten, daß die aus der Schlauchfolienblase (7) abgezogene Schlauchfolienbahn (1,8) eine der Sollbreite entsprechende Breite aufweist, ohne daß durch Injektionen ständig Blasluft nachgefüllt werden muß, wird der Durchmesser der Schlauchfolienblase (7) oder die Breite des aus dieser abgezogenen flachgelegten Schlauches (1,8) gemessen und entsprechend der gemessenen Abweichung des Durchmessers von dem Solldurchmesser der Schlauchfolienblase oder der Breite von der Sollbreite das Vorzugsrollenpaar (6) relativ zu dem Abzugsrollenpaar (13) verfahren.

## Beschreibung

Die Erfindung betrifft ein Verfahren zur Regelung des Durchmessers einer zwischen einem Vorzugsrollenpaar und einem Abzugsrollenpaar zu einer Schlauchfolienblase aufgeblasenen Schlauchfolienbahn, bei dem die Schlauchfolienbahn kontinuierlich aus der Schlauchfolienblase durch das Abzugsrollenpaar abgezogen und durch zwei keilförmig zueinander angeordnete Flachlegeeinrichtungen, die sich in Richtung auf den Einzugsspalt des Abzugswalzenpaares verengen, flachgelegt wird und bei dem die Schlauchfolienbahn im Bereich des Einlaufs der Schlauchfolienblase erwärmt wird.

Es gibt Fälle, in denen eine im Schlauchfolienblasverfahren hergestellte und zu einer Rolle aufgewickelte Kunststoffschlauchfolienbahn zur Erreichung anderer Eigenschaften oder verbesserter Festigkeitswerte nochmals durch Aufblasen zu einer Schlauchfolienblase und Erwärmen verstreckt wird. Das Erwärmen erfolgt dabei auf Temperaturen, die zur Erreichung der gewünschten veränderten Folieneigenschaften erforderlich sind. Vorzugsweise erfolgt die Erwärmung der aufgeblasenen Schlauchfolienbahn im Bereich ihres Einlaufs in die Schlauchfolienblase etwa bis auf ihre Warmumformbarkeitstemperatur (Glasübergangstemperatur). Das Aufblasen der von dem Vorzugsrollenpaar eingezogenen Schlauchfolienbahn erfolgt durch Injektionsnadeln, wobei zur Aufrechterhaltung des Luftdrucks in der Schlauchfolienblase die Injektionsnadeln mitlaufend oder rotierend angeordnet sein können.

Bei dem Aufblasen und Verstrecken der Schlauchfolienbahn in einer Schlauchfolienblase läßt es sich nicht verhindern, daß ständig mit der aus der Schlauchfolienblase abgezogenen und flachgelegten Schlauchfolienbahn durch das Abzugswalzenpaar hindurch Luft mitgeschleppt wird, so daß sich in der Schlauchfolienblase das Luftvolumen ändert und bei sich verringerndem Luftvolumen auch die Schlauchfolienbahn in der Schlauchfolienblase geringer ausgereckt wird, so daß sich der Durchmesser der Schlauchfolienblase oder die Breite der flachgelegten und aus der Schlauchfolienblase abgezogenen Schlauchfolienbahn verringert. Diese Verringerung des Luftvolumens kann durch ständige Zuführung von Blasluft durch Injektionsnadeln ausgeglichen werden, was jedoch mit einer Perforation der Schlauchfolienblase verbunden ist, die grundsätzlich unerwünscht ist.

Aufgabe der Erfindung ist es, ein Verfahren vorzuschlagen, bei dem sich der Luftdruck in der Schlauchfolienblase konstant oder auf einen solchen Wert halten läßt, daß die aus der Schlauchfolienblase abgezogene Schlauchfolienbahn eine der Soll-Breite entsprechende Breite aufweist, ohne daß durch Injektionen ständig Blasluft nachgefüllt werden muß.

Erfindungsgemäß wird diese Aufgabe bei einem Verfahren der eingangs angegebenen Art dadurch gelöst, daß der Durchmesser der Schlauchfolienblase oder die Breite des aus der Schlauchfolienblase abgezogenen und flachgelegten Schlauches gemessen und entsprechend der gemessenen Abweichung des Durchmessers von dem Soll-Durchmesser oder der Breite von der Soll-Breite das Vorzugsrollenpaar relativ zu dem Abzugsrollenpaar verfahren wird.

Wird beispielsweise eine Verringerung des Durchmessers der Schlauchfolienblase oder der Breite des flachgelegten Folienschlauches gemessen, die eine Folge einer Verringerung des Luftdrucks in der Schlauchfolienblase ist, wird das Vorzugsrollenpaar in Richtung auf das Abzugsrollenpaar verfahren, so daß sich das Volumen in dem aufgeblasenen Folienschlauch und der Schlauchfolienblase verringert und dadurch der Luftdruck zum Ausrecken der Schlauchfolienblase entsprechend erhöht wird.

Da der aufgeblasene Folienschlauch erst hinter der Erwärmungszone zu der Schlauchfolienblase aufgeblasen wird, wird die Erwärmungszone im ausreichenden Abstand hinter dem Vorzugsrollenpaar angeordnet, so daß eine genügend lange Strecke des aufgeblasenen und noch nicht zu einer Schlauchfolienblase ausgereckten Folienschlauches vorliegt, die entsprechend der gewünschten Erhöhung des Luftdrucks verringert werden kann. Bei einem zu hohen Luftdruck, beispielsweise unmittelbar nach dem Injizieren von Blasluft, kann die Länge des Folienschlauches, der noch nicht zu der Schlauchfolie aufgeblasen ist, auch vergrößert werden.

Hat das Vorzugsrollenpaar seine größte Annäherung an das Abzugsrollenpaar erreicht, so daß keine weitere Annäherung zur Erhöhung des Luftdrucks mehr möglich ist, wird durch Injektion der Luftdruck in der Schlauchfolienblase erhöht und gleichzeitig das Vorzugsrollenpaar entsprechend der Vergrößerung des Luftvolumens zurückgefahren.

Eine Vorrichtung zur Durchführung des erfindungsgemäßen Verfahrens mit einem in einem Gestell gelagerten angetriebenen Vorzugsrollenpaar für eine flachliegende Schlauchfolienbahn, mit einem gegenüberliegenden, ortsfest gelagerten angetriebenen Abzugsrollenpaar für die aus der aufgeblasenen Schlauchfolienblase abgezogene flachgelegte Schlauchfolienbahn, dem Flachlegeeinrichtungen, beispielsweise keilförmig zueinander angeordnete Flachlegeplatten, vorgeschaltet sind, mit Einrichtungen zum Aufblasen der Schlauchfolienbahn zwischen den Vor- und Abzugsrollenpaaren zu einer Schlauchfolienblase und zum Nachfüllen von Blasluft, Einrichtungen zum Erwärmen der aufgeblasenen Schlauchfolienbahn und mit Einrichtungen zum Messen des Durchmessers der Schlauchblase oder der Breite der flachgelegten, aus der Schlauchblase abgezogenen Schlauchfolienbahn zeichnet sich erfindungsgemäß dadurch aus, daß das Vorzugsrollenpaar in dem Gestell in Richtung auf und in Gegenrichtung zu dem Abzugsrollenpaar verfahrbar angeordnet und eine Steuereinrichtung vorgesehen ist, die entsprechend der Abweichung des gemessenen Durchmessers von dem Durchmesser der Schlauchfolienblase oder der gemessenen Breite von der Soll-Breite der flachgelegten Schlauchfolienbahn das Abzugsrollenpaar verfährt.

Zweckmäßigerweise ist das Abzugsrollenpaar in einem Schlitten gelagert, der in Führungen des Gestells verfahrbar ist.

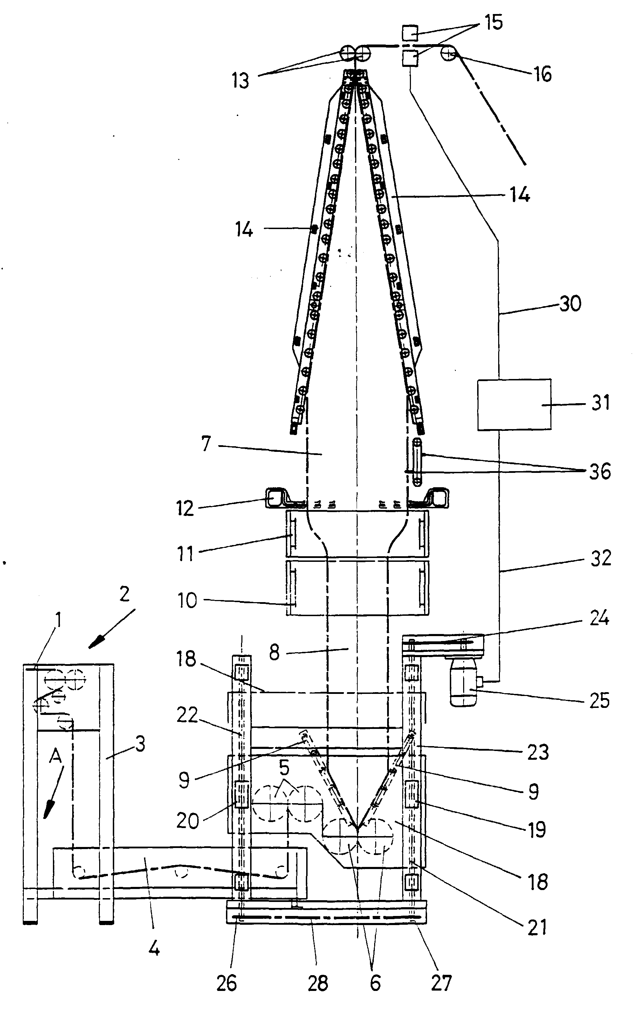

Ein Ausführungsbeispiel der Erfindung wird nachstehend anhand der Zeichnung näher erläutert, in deren einziger Figur eine Seitenansicht der erfindungsgemäßen Vorrichtung schematisch dargestellt ist.

Von einer nicht dargestellten, in einer Abrolleinrichtung gelagerten Vorratsrolle wird eine flachliegende Kunststoffschlauchfolienbahn 1 in Richtung des Pfeils A von einem Vorzugsrollenpaar und nachgeschalteten Umlenkrollen 2, die in einem Ständer 3 gelagert sind, abgezogen. Die Schlauchfolienbahn wird durch Umlenkrollen durch ein beheiztes Wasserbad 4 geleitet, in dem eine Vorwärmung der Schlauchfolienbahn 1 stattfindet. Über Vorzugsrollen bzw. Vorzugsrollenpaare 5, 6, deren Rollen oder Walzen erwärmt sein können, wird die Schlauchfolienbahn 1 vorgezogen. Um einen guten Einlauf der Schlauchfolienbahn 1 in die Schlauchfolienblase 7 bzw. dem dieser vorgeschalteten aufgeblasenen Schlauchabschnitt 8 zu gewährleisten, sind hinter dem Auslaufspalt des Vorzugsrollenpaares 6 keilförmig Leitplatten 9 angeordnet, die ebenfalls mit Röllchen oder reibungsverminderndem Material versehen sein können. Die sich keilförmig erweiternden Leitplatten 9 führen zu einem sanftem Übergang der vorgezogenen flachliegenden Bahn zu dem aufgeblasenen Folienschlauch 8.

Im ausreichenden Abstand oberhalb des Vorzugsrollenpaares 6 bzw. der Leitplatten 9 sind ortsfest zwei Heizringe 10, 11 angeordnet, die aus Infrarotheizringen bestehen können. Der untere Heizring strahlt gleichmäßig Wärme auf den diesen durchwandernden aufgeblasenen Folienschlauch 8 ab. Der Heizring 11 ist in Umfangsrichtung in Heizsektoren unterteilt, die getrennt regelbar sind, so daß sie den durchlaufenden Folienschlauch über den Umfang unterschiedlich zu erwärmen vermögen, falls dies zum Ausgleich unterschiedlicher Wanddicken erforderlich sein sollte. Die unterschiedliche Erwärmung eines Folienschlauches über seinen Umfang zum Ausgleich von Dickenschwankungen ist bekannt und braucht daher hier nicht näher beschrieben zu werden. Oberhalb des sektoriell regelbaren Heizringes 11 ist ein üblicher Kühlring 12 angeordnet, aus dessen der Schlauchfolienblase 7 zugewandten ringförmigen Austrittsschlitz Kühlluft auf die Folienblase 7 geblasen wird. Der zu einer Folienblase 7 aufgeblasene Folienschlauch wird durch ein Abzugsrollenpaar 13, das senkrecht über dem Vorzugsrollenpaar 6 ortsfest beispielsweise an der Decke einer Fabrikationshalle angeordnet ist, abgezogen. Dem Abzugsrollenpaar 13 sind keilförmig zueinander angeordnete plattenförmige Flachlegeeinrichtungen 14 vorgeschaltet, die sich in Richtung auf den Einzugsspalt des Abzugswalzenpaares 13 hin verengen. Die plattenförmigen Flachlegeeinrichtungen 14 sind in nicht dargestellter Weise ortsfest gelagert bzw. gehaltert.

Die durch das Abzugswalzen- bzw. Rollenpaar 13 flachgelegte Schlauchfolienbahn durchläuft eine Breitenmeßeinrichtung 15, die die Breite der aus der Folienblase 7 abgezogenen flachgelegten Schlauchfolienbahn mißt. Über Umlenkrollen 16 wird die wieder flachgelegte Schlauchfolienbahn einer nicht dargestellten Aufrolleinrichtung oder weiterverarbeitenden Einrichtungen zugeführt.

Die Vorzugsrollen bzw. Vorzugsrollenpaare 5, 6 und die keilförmig zueinander angeordneten Leitplatten 9 sind in einem hintere und vordere Seitenwände aufweisenden Schliffen 18 gelagert, der mit Gewindemuttern 19, 20 fest verbunden ist. Die Gewindemuttern 19, 20 fassen Gewindespindeln 21, 22 ein, die senkrecht stehend in einem Gestell 23 drehbar gelagert sind. Zum Verfahren des Schlittens 18 nach oben und unten sind die Gewindespindeln 21, 22 über ein Getriebe 24 von einem steuerbaren Motor 25 angetrieben. Die Gewindespindeln 21, 22 tragen Kettenräder 26, 27, über die eine endlose Antriebskette 28 läuft, die den Gleichlauf der Gewindespindeln 21, 22 sicherstellt. Der Schliffen 18 kann zusätzlich zu seinem Spindelantrieb auf nicht dargestellten Führungen des Gestells 23 heb- und absenkbar geführt sein.

Die Breitenmeßeinrichtung 15 führt ihre Meßsignale über eine Leitung 30 der aus einem Rechner bestehenden Steuer- und Regeleinheit 31 zu, die die gemessene Ist-Breite der flachgelegten Schlauchfolienbahn mit der eingespeicherten Soll-Breite vergleicht und entsprechend der Abweichung der Ist-Breite von der Soll-Breite Steuersignale erzeugt und über die Leitung 32 dem Rotor 25 zuführt.

Ergibt sich eine zu geringe Breite der flachgelegten Schlauchfolienbahn, wird über die Steuer- und Regeleinrichtung 31 und den Motor 25 der Schliffen 18 nach oben verfahren, so daß sich die Länge des aufgeblasenen Folienschlauches unterhalb der Schlauchfolienblase 7 verringert und dadurch der Druck der Schlauchfolienblase 7 erhöht und diese zur Vergrößerung der Breite der flachgelegten Schlauchfolienblase stärker ausgereckt wird.

Der Schliffen 18 ist in der Position 18' etwa in seiner oberen Endlage gezeigt. Hat der Schlitten 18 seine obere Endlage erreicht, wird über mitlaufende Injektionsnadeln 36, die die Wand der Schlauchfolienblase durchdringen, Blasluft in die Schlauchfolienblase 7 eingeblasen und entsprechend des dadurch vergrößerten Luftvolumens der Schliffen 18 wieder nach unten verfahren, so daß die Zuführung von Blasluft durch Injektionsnadeln unterbrochen werden kann, bis der Schlitten 18 wieder in seine obere Endposition verfahren worden ist. Die Zuführung von Blasluft in die Folienblase 7 durch über eine gewisse Strecke mitlaufende Injektionsnadeln, die zu Beginn der Strecke eingestochen und am Ende der Strecke wieder herausgezogen werden, ist bekannt und braucht daher hier nicht näher beschrieben zu werden.

## Patentansprüche

1. Verfahren zur Regelung des Durchmessers einer zwischen einem Vorzugsrollenpaar (6) und einem Abzugsrollenpaar (13) zu einer Schlauchfolienblase (7) aufgeblasenen Schlauchfolienbahn (1, 8), bei dem die Schlauchfolienbahn kontinuierlich aus der Schlauchfolienblase (7) durch das Abzugsrollenpaar (13) abgezogen und durch zwei keilförmig zueinander angeordnete Flachlegeeinrichtungen (14), die sich in Richtung auf den Einzugsspalt des Abzugswalzenpaares (13) hin verengen, flachgelegt wird, und bei dem die Schlauchfolienbahn (8) im Bereich des Einlaufs in die Schlauchfolienblase (7) erwärmt und der Luft- oder Gasdruck in der Schlauchfolienblase (7) im wesentlichen konstant gehalten wird,
dadurch gekennzeichnet,
daß der Durchmesser der Schlauchfolienblase (7) oder die Breite des aus der Schlauchfolienblase abgezogenen flachgelegten Schlauches gemessen und entsprechend der gemessenen Abweichung des Durchmessers von dem Soll-Durchmesser der Schlauchfolienblase oder der Breite von der Soll-Breite das Vorzugsrollenpaar (6) relativ zu dem Abzugsrollenpaar (13) verfahren wird.

2. Vorrichtung zur Durchführung des Verfahrens nach Anspruch 1
mit einem in einem Gestell (23) gelagerten, angetriebenen Vorzugsrollenpaar (6) für eine flachliegende Schlauchfolienbahn (1),
mit einem gegenüberliegenden, ortsfest gelagerten, angetriebenen Abzugsrollenpaar (13) für die aus der aufgeblasenen Schlauchfolienblase (7) abgezogene flachgelegte Schlauchfolienbahn, dem Flachlegeeinrichtungen, vorzugsweise keilförmig zueinander angeordnete Flachlegeplatten (14), vorgeschaltet sind,
mit Einrichtungen (36) zum Aufblasen der Schlauchfolienbahn zwischen dem Vor- und Abzugsrollenpaaren (6, 13) zu einer Schlauchfolienblase (7) und zum Nachfüllen von Blasluft,
mit Einrichtungen (10, 11) zum Erwärmen der aufgeblasenen Schlauchfolienbahn (8) und
mit Einrichtungen (15) zum Messen des Durchmessers der Schlauchblase oder der Breite der flachgelegten, aus der Schlauchblase (7) abgezogenen Schlauchfolienbahn,
dadurch gekennzeichnet,
daß das Vorzugsrollenpaar (6) an dem Gestell (23) in Richtung auf und in Gegenrichtung zu dem Abzugsrollenpaar (13) verfahrbar angeordnet und eine Steuer- und Regeleinrichtung (31) vorgesehen ist, die entsprechend der Abweichung des gemessenen Durchmessers von dem Durchmesser der Schlauchfolienblase (7) oder der gemessenen Breite von der Soll-Breite der flachgelegten Schlauchbahn das Abzugsrollenpaar (6) verfährt.

3. Vorrichtung nach Anspruch 2, dadurch gekennzeichnet, daß das Abzugsrollenpaar (6) in einem Schlitten (18) gelagert ist, der in Führungen des Gestells (23) verfahrbar ist.
